Europäisches Patentamt

European Patent Office

Office européen des brevets

(19)

(11)  EP 0 586 248 B1

(12)  EUROPEAN PATENT SPECIFICATION

(45) Date of publication and mention
of the grant of the patent:
**22.07.1998  Bulletin 1998/30**

(51) Int Cl.6: **G11B 27/038**, G11B 27/024

(21) Application number: **93306935.3**

(22) Date of filing: **02.09.1993**

(54) **Editing methods and apparatuses**

Editiermethode und Editiergeräte

Méthodes et appareils de montage

(84) Designated Contracting States:
**DE FR GB**

(30) Priority:  **04.09.1992  JP 237242/92**

(43) Date of publication of application:
**09.03.1994  Bulletin 1994/10**

(73) Proprietor: **SONY CORPORATION**
**Tokyo (JP)**

(72) Inventors:
• **Yamamoto, Tomoyuki,**
**c/o Intellectual Property Div.**
**Shinagawa-ku, Tokyo 141 (JP)**
• **Matsui, Masafumi, c/o Intellectual Property Div.**
**Shinagawa-ku, Tokyo 141 (JP)**

(74) Representative: **Cotter, Ivan John et al**
**D. YOUNG & CO.**
**21 New Fetter Lane**
**London EC4A 1DA (GB)**

(56) References cited:
**EP-A- 0 077 686**          **EP-A- 0 446 054**
**US-A- 4 807 060**          **US-A- 5 060 087**

## Description

This invention relates to editing methods and apparatuses.

EP-A-0 446 054 discloses an integrated video camera and video tape recorder. A combining circuit of EP-A-0 446 054 is arranged to receive:

a) camera signals from an image sensor; and
b) title signals from a title signal former and character generator.

The combined camera signals and title signals are recorded on the video tape recorder (VTR).

A controller controls the operation of the title signal former character generator, and VTR, under the control of programs stored in a storage device.

The timing of starting and stopping of the VTR maybe synchronized with signal combining, fade-in or fade-out.

EP-A-0 466 054 also discloses circuitry for generating music. The circuitry allows an operator to simultaneously record or reproduce music and images by a single operation.

The integrated camera and VTR does not allow the editing of a plurality of video signals reproduced from respective playback media together with one or more audio signals reproduced from respective audio playback media onto the same recording medium.

In conventional editing (electronic editing), when first video and audio signals reproduced from a first video tape recorder (VTR) and second video and audio signals reproduced from a second VTR are sequentially supplied to a third VTR so that the first and second video and audio signals are edited with or without some special effect for the editing point and are recorded on a magnetic tape, video and audio signals from a common source (the first or second VTR) are always inseparably handled.

In the conventional editing, therefore, when video and audio signals of different sources are combined for editing, editing must be done first, for audio signals or for video signals, and then, for the remaining signals, by an after-recording technique. Therefore, the editing operation is complex.

According to a first aspect of the invention there is provided an automated editing method for editing video and audio signals automatically onto a recording medium, the method comprising at least the steps of: defining the start and end points of first, second and further signals to be reproduced from respective first, second and third playback media and recorded on the same recording medium, said first and second signals being one of video and audio signals, said further signal being the other of said video and audio signals; automatically synchronizing the start point of the first reproduced signal to a first reference time of said recording medium; automatically synchronizing the end point of said first reproduced signal and the start point of the second reproduced signal to a second reference time of said recording medium thereby defining a first duration between the start and end points of said first reproduced signal, the second reference time being later in time than said first reference time; automatically synchronizing the end point of said second reproduced signal to a third reference time of said recording medium thereby defining a second duration between the start and end points of said second reproduced signal, the third reference time being later in time than said second reference time automatically synchronizing the start point of the further reproduced signal to said first reference time of said recording medium; automatically synchronizing the end point of said further reproduced signal to said third reference time of said recording medium thereby defining a third duration between the start and end points of said further reproduced signal; automatically setting the end point of said first reproduced signal and said start point of said second reproduced signal such that a sum of said first and second durations equals the third duration of said further reproduced signal; sequentially delivering said first and second reproduced signals to said recording medium as a function of said first, second and third reference times such that said first reproduced signal is delivered from said first reference time substantially until said second reference time and said second reproduced signal is delivered substantially from said second reference time until said third reference time delivering said further reproduced signal to said recording medium concurrently with the sequential delivery of said first and second reproduced signals so that said further reproduced signal is delivered from said first reference time until said third reference time, and recording said first and second reproduced signals simultaneously with said further reproduced signal onto said recording medium.

According to a second aspect of the invention there is provided an automated editing apparatus for editing video and audio signals automatically onto a recording medium comprising: first, second and further reproducing means for reproducing first, second and further signals from respective playback media; the first and second signals being one of video and audio signals the further signal being the other of the said video and audio signals; recording means for recording the first and second signals on the same recording medium, concurrently with the recording of the further signal on the said recording medium; first means for sequentially delivering the first and second signals to the recording means; second means for delivering the further signal to the recording means; and control means being operable to at least receive data defining the start and end points of the first, second and further signals to be reproduced and recorded on the recording medium, and to at least:- automatically synchronize the start point of the first reproduced signal to a first reference time of said recording medium; automatically synchronize the end point of said first reproduced signal and the start point of the second reproduced signal to a second reference time of said recording medium thereby defining a first duration between the start and end points of said first reproduced signal, the second reference time being later in time than said first reference time; automatically synchronize an end point of said second reproduced signal to a third reference time of said recording medium thereby defining a second duration between the start and end points of said second reproduced signal, the third reference time being later in time than said second reference time; automatically synchronize a start point of the further reproduced signal to said first reference time of said recording medium; automatically synchronize an end point of said further reproduced signal to said third reference time of said recording medium thereby defining a third duration between the start and end points of said further reproduced signal; automatically set the end point of said first reproduced signal and said start point of said second reproduced signal such that a sum of said first and second durations equals the third duration of said further reproduced signal; control the first delivering means to sequentially deliver said first and second reproduced signals to said recording means as a function of said first, synchronizing the end point of the third reproduced signal and the start point of the fourth reproduced signal to a fourth reference time of said recording medium the fourth reference time being later in time than said first reference time; automatically synchronizing the end part of the fourth signal to the said third reference time of said recording medium, the said third reference time being later in time than said fourth reference time; and control the second delivering means to deliver the said third and fourth signals to said recording medium concurrently with the sequential delivery of the said first and second signals so that the third and fourth signals are delivered from said first reference time until said third reference time.

Preferred embodiments of the invention described below provide a method and apparatus for easily and freely combining video signals and audio signals for editing even when the video signals are reproduced from different sources and/or the audio signals are reproduced from different sources, and after some special effect is given to the editing point(s) for the video and/or audio signals, they are recorded onto another recording medium together.

The invention will now be further described, by way of illustrative and nonlimiting example, with reference to the accompanying drawings, in which:

Figure 1A illustrates a mode of editing by way of background to the present invention and Figures 1B-1E show various modes of editing used in embodiments of the present invention.

Fig. 2 is a block diagram showing an editing apparatus of the embodiment.

Fig. 3 is a flow-chart showing steps of editing video signals in the embodiment.

Fig. 4 is a flow-chart showing steps of editing audio signals in the embodiment.

Fig. 5 is a table showing controls by an editor at each timings in the embodiment.

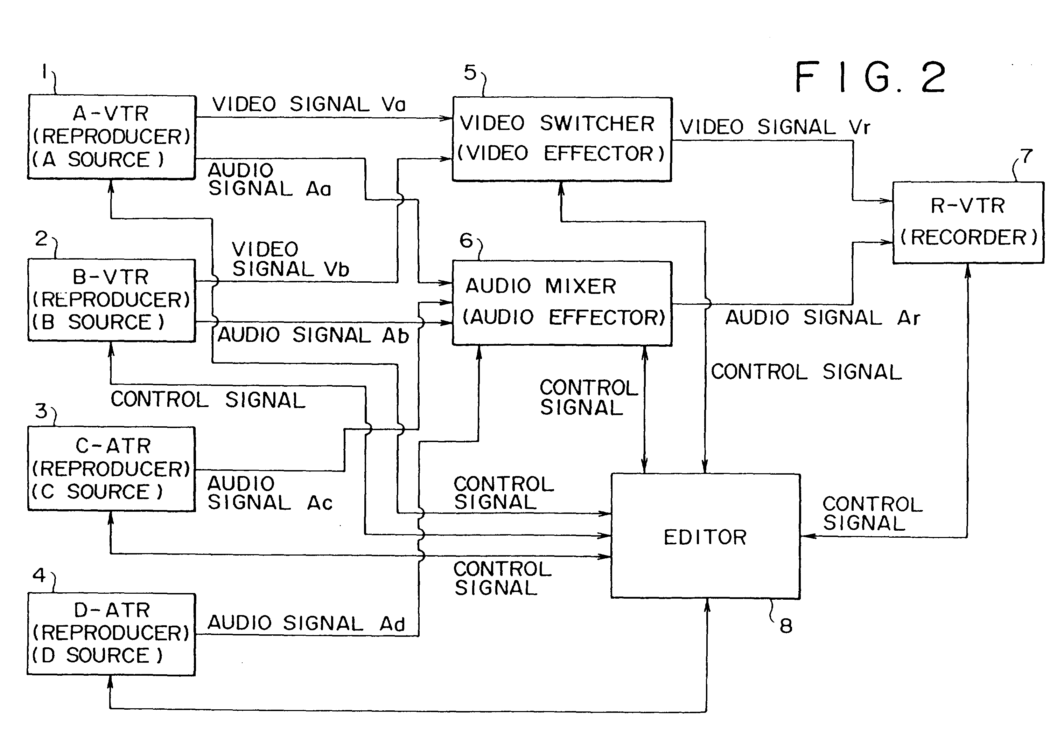

Referring to the drawings, several embodiments of the present invention will be explained. First, referring to Fig. 2, an editing apparatus for performing A/B roll editing will be explained. An A-VTR 1 for reproducing (a video tape recorder having a rotary magnetic head ) reproduces a video signal Va and an audio signal Aa from a magnetic tape. (These signals are referred to as A source.) The reproduced video and audio signals Va and Aa are supplied to a video switcher (video effector) 5 and an audio mixer (audio effector) 6, respectively. A B-VTR 2 for reproducing (a video tape recorder having a rotary magnetic head ) reproduces a video signal V band an audio signal Ab from a magnetic tape. (These signals are referred to as B source.) The reproduced video and audio signals Vb and Ab are supplied to video switcher (video effector) 5 and audio mixer (audio effector) 6, respectively. A C-ATR 3 for reproducing ( a tape recorder having a stationary magnetic head or a rotary magnetic head) reproduces an audio signal Ac from a magnetic tape. ( This signal is referred to as C source.) The reproduced audio signal Ac is suppliedto audio mixer (audio effector) 6. A D-ATR 4 for reproducing ( a tape recorder having a stationary magnetic head or a rotary magnetic head) reproduces an audio signal Ad from a magnetic tape. ( This signal is referred to as D source.) The reproduced audio signal Ad is supplied to audio mixer (audio effector) 6. A video signal Vr is derived from video switcher 5 and an audio signal Ar is derived from audio mixer 6. The video and audio signals Vr and Ar are supplied to a R-VTR 7 for recording and are edited thereby. An editor 8 (including a micro-computer ) controls the above components 1-7 by supplying control signals, respectively.

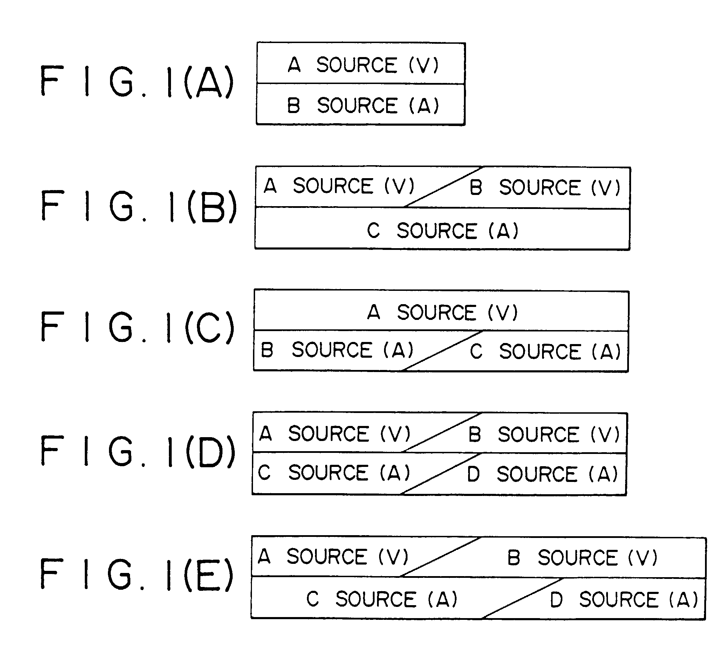

Referring to Fig. 1A, an editing operation will be described by way of background to the present invention.

Fig. 1(A) shows a simultaneous recording of the video signal (V) of A source with the audio signal (A) of B source by recording VTR 7 in such a manner that their cut-in points and cut-out points on a magnetic tape are aligned with each other. (It is OK if the points are not aligned.)

Figures 1(B) to 1(E) show embodiments of the present invention.

Fig. 1(B) shows a simultaneous recording of the video signals (V) of A and B sources with the audio signal (A) of C source after processing the ending portion of the video signal of A source and the beginning portion of the video signal of B source; a fade-in / fade-out effect is given here, and by supplying the processed video signals of A and B sources in this order with the audio signal of C source to recording VTR 7 in such a manner that their cut-in points and cut-out points on a magnetic tape are aligned with each other. ( It is OK if the points are not aligned.)

Fig. 1(C) shows a simultaneous recording of the video signal (v) of A source with the audio signals (A) of B and C sources after processing the ending portion of the audio signal of B source and the beginning portion of the audio signal of C source; a fade-in / fade-out effect is given here, and supplying the video signal of A source with the audio signals of B and C sources in this order to recording VTR 7, in such a manner that their cut-in points and cut-out points on a magnetic tape are aligned with each other. ( It is OK if the points are not aligned.)

Fig. 1(D) shows a simultaneous recording of the video signals (V) of A and B sources with the audio signals (A) of C and D sources after processing the ending portion of the video signal of A source and the beginning portion of the video signal of B source; a fade-in / fade-out effect is given here, at the same time, processing the ending portion of the audio signal of C source and the beginning portion of the audio signal of D source; a fade-in / fade-out effect is given here, and supplying the video signals of A and B sources with the audio signals of C and D sources in these orders to recording VTR 7 in such a manner that their cut-in points and cut-out points on the magnetic tape are aligned with each other. ( It is OK if the points are not aligned.)

Fig. 1(E) shows a simultaneous recording of the video signals (V) of A and B sources with the audio signals (A) of C and D sources after processing the ending portion of the video signal of A source and the beginning portion of the video signal of B source; a fade-in / fade-out effect is given here, processing at different timing the ending portion of the audio signal of C source and the beginning portion of the audio signal of D source; a fade-in / fade-out effect is given here, and supplying the video signals of A and B sources with the audio signals of C and D sources in these orders to recording VTR 7 in such a manner that their cut-in points and cut-out points on the magnetic tape are aligned with each other. ( It is OK if the points are not aligned.)

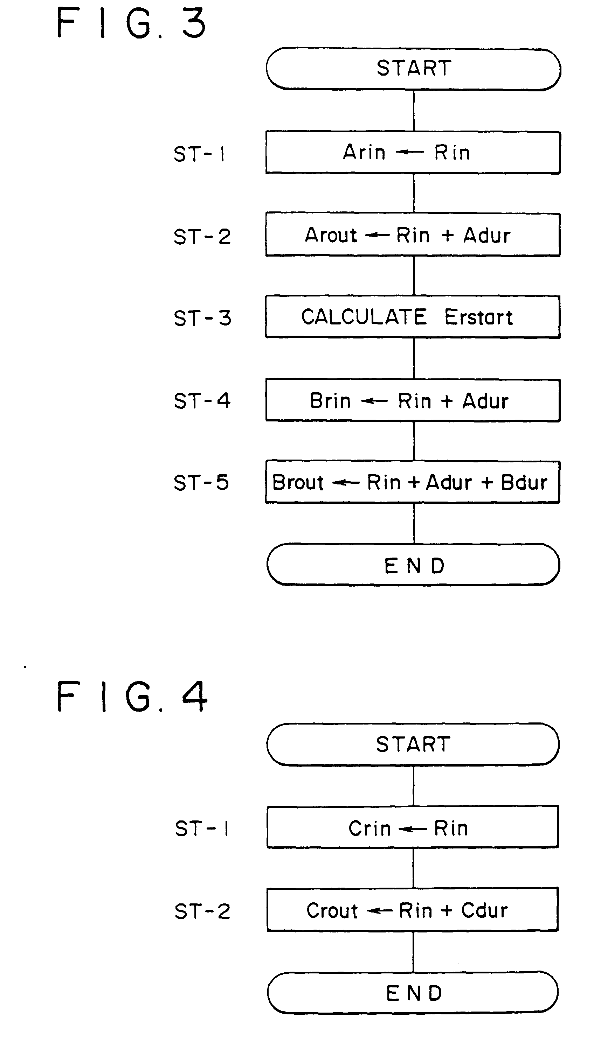

Using the case of Fig. 1(B) as an example, a detail of editing video and audio signals will be described hereinafter, referring to flow-charts as shown in Figs. 3 and 4.

Editing data set by an operator using editor 8 includes an information that video signal sources change from A source to B source (A/B roll ) and that an audio signal source is C source. The editing data also includes the following information:

In-point and out-point of A source : $A_{in}$, $A_{out}$
In-point and out-point of B source : $B_{in}$, $B_{out}$
In-point and out-point of C source : $C_{in}$, $C_{out}$
In-point and out-point of recording VTR 7 : $R_{in}$, $R_{out}$

Transitional period during which video signals are changing from A source to B source : Trans

Editor 8 calculates the editing data which is a starting point of the effect processing, that is, a timing at which video signals start to change from A source to B source. There are several kinds of ways to calculate that. Let us assume that the starting point of the effect processing is $E_{start}$.

In-points and out-points of A, B and C sources are converted onto a time axis ( a reference time axis ) on the magnetic tape in recording VTR 7 as follows:

$A_{in} \rightarrow A_{rin}$, $A_{out} \rightarrow A_{rout}$, $B_{in} \rightarrow B_{rin}$, $B_{out} \rightarrow B_{rout}$, $C_{in} \rightarrow C_{rin}$, $C_{out} \rightarrow C_{rout}$

Durations of A, B and C sources, $A_{dur}$, $B_{dur}$ and $C_{dur}$ are expressed as the following equations.

$$A_{dur} = A_{out} - A_{in}, B_{dur} = B_{out} - B_{in}, C_{dur} = C_{out} - C_{in}$$

First, referring to Fig. 3, steps of editing video signals will be described.

Step ST-1 : Making $A_{in}$ coincident with $A_{rin}$.
Step ST-2 : Making the sum of $A_{rin}$ and $A_{dur}$ (or the sum of $R_{in}$ and $A_{dur}$ ) coincident with $A_{rout}$.
Step ST-3 : Setting the starting points of the effect $E_{start}$ ( $= Ar_{out} = R_{in} + A_{dur}$, for example)
Step ST-4 : Because out-point $A_{out}$ of A source coincides with in-point $B_{in}$ of B source,

$$B_{rin} = A_{rout} = R_{in} + A_{dur}.$$

Step ST-5 : Making the sum of $B_{rin}$ and $B_{dur}$, that is, the sum of $R_{in}$, $A_{dur}$ and $B_{dur}$ coincident with $B_{rout}$ ($= R_{out}$).

Next, referring to Fig. 4, steps of editing audio signals will be described.

Step ST-1 : Making the in-point $R_{in}$ of the recording VTR coincident with the in-point $C_{in}$ of C source.
Step ST-2 : Making the sum of in-point $R_{in}$ of the recording VTR and the duration $C_{dur}$ of C source with the out-point $C_{rout}$ of C source.

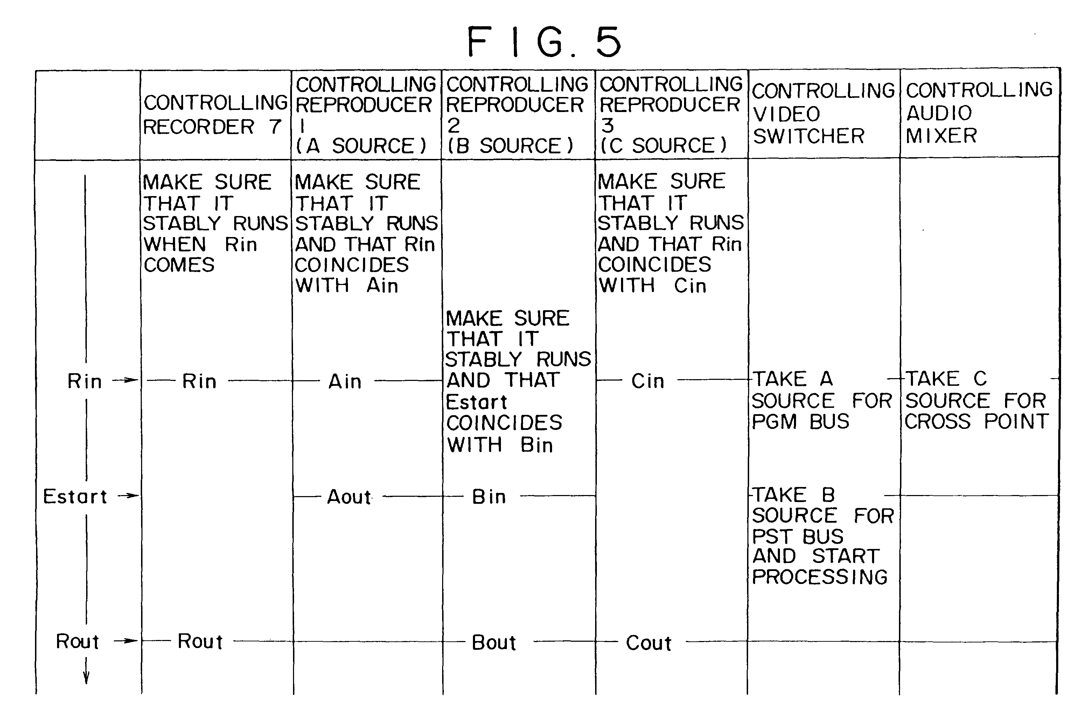

Referring to Fig. 5, how editor 8 controls respective components in the case of editing as shown in Fig. 1(B) will be described.

1. R-VTR 7, A-VTR 1 and C-ATR 3 are controlled so that when the in-point of R-VTR 7 comes, the in-point $R_{in}$ of R-VTR, the in-point $A_{in}$ of A source and the in-point $C_{in}$ of C source come. Video switcher 5 is controlled so that it takes A source for a cross-point [PGM (Program) bus ] when the in-point $R_{in}$ of R-VTR comes. Audio mixer 6 is controlled so that it takes C source for a cross-point when the in-point $R_{in}$ of R-VTR comes.

2. B-VTR 2 is controlled so that when $R_{in} + A_{dur}$ comes, the in-point $B_{in}$ of B source comes. Video switcher 5 is controlled so that it takes B source for a cross-point [PST (preset) bus ] when $R_{in} + A_{dur}$ comes. Switcher 5, then starts processing to give a change effect from A source to B source. A conventional video switcher has a PGM bus and a PST bus so that in A/B roll editing, it takes A source for the PGM bus and B source for the PST bus and starts the processing to give an effect.

In the editing method and apparatus according to the above-described embodiment, when video signals or audio signals reproduced from different recording media are connected with each other after being processed to give an effect and are recorded onto another recording medium, video signals and audio signals from different sources are easily combined and edited.

## Claims

1. An automated editing method for editing video and audio signals automatically onto a recording medium, the method comprising at least the steps of:

   defining the start and end points of first (A), second (B) and further (C) signals to be reproduced from respective first, second and third playback media and recorded on the same recording medium, said first and second signals being one of video and audio signals, said further signal being the other of said video and audio signals;
   automatically synchronizing the start point ($A_{in}$) of the first reproduced signal (A(V)) to a first reference time ($R_{in}$) of said recording medium;
   automatically synchronizing the end point ($A_{out}$) of said first reproduced signal and the start point ($B_{in}$) of the second reproduced signal (B(V)) to a second reference time ($E_{start}$) of said recording medium thereby defining a first duration ($A_{dur}$) between the start and end points of said first reproduced signal (A), the second reference ($E_{start}$) time being later in time than said first reference time ($R_{in}$);
   automatically synchronizing the end point ($B_{out}$) of said second reproduced signal to a third reference time ($R_{out}$) of said recording medium thereby defining a second duration ($B_{dur}$) between the start and end points of said second reproduced signal, the third reference time ($R_{out}$) being later in time than said second reference time ($E_{start}$);
   automatically synchronizing the start point ($C_{in}$) of the further reproduced signal (C(A)) to said first reference time ($R_{in}$) of said recording medium;
   automatically synchronizing the end point ($C_{out}$) of said further reproduced signal to said third reference time ($R_{out}$) of said recording medium thereby defining a third duration ($C_{dur}$) between the start and end points of said further reproduced signal;

   automatically setting the end point of said first reproduced signal ($A_{out}$) and said start point of said second reproduced signal ($B_{in}$) such that a sum of said first ($A_{dur}$) and second ($B_{dur}$) durations equals the third duration ($C_{dur}$) of said further reproduced signal;
   sequentially delivering said first (A) and second (B) reproduced signals to said recording medium as a function of said first ($R_{in}$), second ($E_{start}$) and third ($R_{out}$) reference times such that said first reproduced signal (A) is delivered from said first reference time ($R_{in}$) substantially until said second reference time ($E_{start}$) and said second reproduced signal ($B_{in}$) is delivered substantially from said second reference time ($E_{start}$) until said third reference time ($R_{out}$);
   delivering said further reproduced signal (C) to said recording medium concurrently with the sequential delivery of said first (A) and second (B) reproduced signals so that said further reproduced signal (C) is delivered from said first reference time ($R_{in}$) until said third reference time ($R_{out}$); and
   recording said first (A) and second (B) reproduced signals simultaneously with said further reproduced signal (C) onto said recording medium.

2. An automated editing apparatus for editing video and audio signals automatically onto a recording medium comprising:

   first (1), second (2) and further (3, 4) reproducing means for reproducing first (A), second (B) and further (C) signals from respective playback media;
   the first and second (A, B) signals being one of video and audio signals the further (C) signal being the other of the said video and audio signals;
   recording means (7) for recording the first and second signals on the same recording medium, concurrently with the recording of the further signal on the said recording medium;
   first means (5) for sequentially delivering the first (A) and second (B) signals to the recording means (7);
   second means (6) for delivering the further signal (C) to the recording means (7); and
   control means (8) being operable to at least receive data defining the start and end points of the first, second and further signals to be reproduced and recorded on the recording medium, and to at least:-

   automatically synchronize the start point ($A_{in}$) of the first reproduced signal (A) to a first reference time ($R_{in}$) of said recording

medium;

automatically synchronize the end point ($A_{out}$) of said first reproduced signal (A) and the start point ($B_{in}$) of the second reproduced signal (B) to a second reference time ($E_{start}$) of said recording medium thereby defining a first duration ($A_{dur}$) between the start and end points of said first reproduced signal, the second reference time being later in time than said first reference time;

automatically synchronize an end point ($B_{out}$) of said second reproduced signal (B) to a third reference time ($R_{out}$) of said recording medium thereby defining a second duration ($B_{dur}$) between the start and end points of said second reproduced signal, the third reference time being later in time than said second reference time;

automatically synchronize a start point ($C_{in}$) of the further reproduced signal (C) to said first reference time ($R_{in}$) of said recording medium;

automatically synchronize an end point ($C_{out}$) of said further reproduced signal (C) to said third reference time ($R_{out}$) of said recording medium thereby defining a third duration ($C_{dur}$) between the start and end points of said further reproduced signal;

automatically set the end point of said first reproduced signal and said start point of said second reproduced signal such that a sum of said first and second durations equals the third duration of said further reproduced signal;

control the first delivering means (5) to sequentially deliver said first and second reproduced signals to said recording means as a function of said first, second and third reference times such that said first reproduced signal is delivered from said first reference time substantially until said second reference time and said second reproduced signal is delivered substantially from said second reference time until said third reference time; and

control the second delivering means (6) to deliver said further reproduced signal to said recording means for recording concurrently with the sequential delivery of said first and second reproduced signals so that said further reproduced signal is delivered from said first reference time until said third reference time.

3. An editing method according to claim 1, wherein the said further signal comprises third and fourth signals and additionally comprising the steps of:

defining the start and end points of the third and fourth signal (D) to be reproduced from a playback medium and recorded on the said recording medium the fourth signal being the said other of the video and audio signals;

automatically synchronizing the end point of the third reproduced signal to said first reference time ($R_{in}$) of the recording medium;

automatically synchronizing the end point of the third reproduced signal and the start point of the fourth reproduced signal to a fourth reference time of said recording medium the fourth reference time being later in time than said first reference time;

automatically synchronizing the end part of the fourth signal to the said third reference time ($R_{out}$) of said recording medium, the said third reference time ($R_{out}$) being later in time than said fourth reference time; and

sequentially delivering the said third and fourth signals to said recording medium concurrently with the sequential delivery of the said first and second signals so that the third and fourth signals are delivered from said first reference time ($R_{in}$) until said third reference time ($R_{out}$).

4. Editing apparatus according to claim 2, wherein the further reproducing means comprises a third reproducer (3) and a fourth reproducer (4), the second delivering means (6) is for sequentially delivering the third and fourth signals to the recording means, and the control means (8) is operable to:

receive data defining the start and end points of third (C) and fourth (D) signals to be reproduced from respective playback media by the third and fourth reproducers (3, 4) and recorded on the said recording medium as the said further signal and to automatically synchronizing the end point of the third reproduced signal to said first reference time ($R_{in}$) of the recording medium;

automatically synchronize the end point of the third reproduced signal and the start point of the fourth reproduced signal to a fourth reference time of said recording medium the fourth reference time being later in time than said first reference time;

automatically synchronize the end part of the fourth signal to the said third reference time ($R_{out}$) of said recording medium, the said third reference time ($R_{out}$) being later in time than said fourth reference time; and

control the second delivering means to deliver the said third and fourth signals to said recording medium concurrently with the sequential delivery of the said first and second signals so that the third and fourth signals are delivered from said first reference time ($R_{in}$) until said

third reference time ($R_{out}$).

**Patentansprüche**

1. Automatisches Editierverfahren zum automatischen Editieren von Video- und Audiosignalen auf ein Aufzeichnungsmedium, wobei das Verfahren wenigstens die Schritte aufweist:

Definition der Start- und Endpunkte eines ersten (A), zweiten (B) und weiteren (C) von jeweiligen ersten, zweiten und dritten Wiedergabemedien wiederzugebenden und auf dem gleichen Aufzeichnungsmedium aufzuzeichnenden Signalen, wobei das erste und zweite Signal eines von Video- und Audiosignalen ist und das weitere Signal das andere der Video- und Audiosignale ist;
automatische Synchronisierung des Startpunktes ($A_{in}$) des ersten wiedergegebenen Signales (A(V)) mit einer ersten Referenzzeit ($R_{in}$) auf dem Aufzeichnungsmedium;
automatische Synchronisierung des Endpunktes ($A_{out}$) des ersten wiedergegebenen Signales und des Startpunktes ($B_{in}$) des zweiten wiedergegebenen Signales (B(V)) mit einer zweiten Referenzzeit ($E_{start}$) des Aufzeichnungsmediums und dadurch einer ersten Dauer ($A_{dur}$) zwischen den Start- und Endpunkten des ersten wiedergegebenen Signals (A), wobei die zweite Referenzzeit ($E_{start}$) zeitlich später ist als die erste Referenzzeit ($R_{in}$);
automatische Synchronisierung des Endpunktes ($B_{out}$) des zweiten wiedergegebenen Signales mit einer dritten Referenzzeit ($R_{out}$) des Aufzeichnungsmediums und dadurch Definition einer zweiten Dauer ($B_{dur}$) zwischen den Start- und Endpunkten des zweiten wiedergegebenen Signals, wobei die dritte Referenzzeit ($R_{out}$) zeitlich später ist als die zweite Referenzzeit ($E_{start}$);
automatische Synchronisierung des Startpunktes ($C_{in}$) des weiteren wiedergegebenen Signales (C(A)) mit der ersten Referenzzeit ($R_{in}$) des Aufzeichnungsmediums;
automatische Synchronisierung des Endpunktes ($C_{out}$) des weiteren wiedergegebenen Signales mit der dritten Referenzzeit ($R_{out}$) des Aufzeichnungsmediums und dadurch Definition einer dritten Dauer ($C_{dur}$) zwischen den Start- und Endpunkten des weiteren wiedergegebenen Signals;
automatische Einstellung des Endpunktes des ersten wiedergegebenen Signales ($A_{out}$) und des Startpunktes des zweiten wiedergegebenen Signales ($B_{in}$) derart, daß die Summe der ersten ($A_{dur}$) und der zweiten ($B_{dur}$) Dauern gleich der dritten Dauer ($C_{dur}$) des weiteren wiedergegebenen Signals ist;
aufeinanderfolgende Zuführung des ersten (A) und zweiten (B) wiedergegebenen Signals zu dem Aufzeichnungsmedium als Funktion der ersten ($R_{in}$), zweiten ($E_{start}$) und dritten ($R_{out}$) Referenzzeiten derart, daß das erste wiedergegebene Signal (A) von der ersten Referenzzeit ($R_{in}$) im wesentlichen bis zu der zweiten Referenzzeit ($E_{start}$) zugeführt wird und das zweite wiedergegebene Signal ($B_{in}$) im wesentlichen von der zweiten Referenzzeit ($E_{start}$) bis zu der dritten Referenzzeit ($R_{out}$) zugeführt wird;
Zuführung des dritten wiedergegebenen Signals (C) zu dem Aufzeichnungsmedium zusammen mit der aufeinanderfolgenden Zuführung des ersten (A) und zweiten (B) wiedergegebenen Signals, so daß das weitere wiedergegebene Signal (C) von der ersten Referenzzeit ($R_{in}$) bis zu der dritten Referenzzeit ($R_{out}$) zugeführt wird; und
Aufzeichnung des ersten (A) und zweiten (B) wiedergegebenen Signals simultan mit dem weiteren wiedergegebenen Signal (C) auf das Aufzeichnungsmedium.

2. Automatische Editiervorrichtung zum automatischen Editieren von Video- und Audiosignalen auf ein Aufzeichnungsmedium aufweisend:

eine erste (1), zweite (2) und weitere (3, 4) Wiedergabeeinrichtungen zur Wiedergabe eines ersten (A), zweiten (B) und weiteren (C) Signals von jeweiligen Abspielmedien;
wobei das erste und zweite (A, B) Signal eines von Video- und Audiosignalen ist und das weitere (C) Signal das andere von den Video- und Audiosignalen ist;
eine Aufzeichnungseinrichtung (7) zur Aufzeichnung des ersten und zweiten Signals auf das gleiche Aufzeichnungsmedium zusammen mit der Aufzeichnung des weiteren Signals auf das Aufzeichnungsmedium;
eine erste Einrichtung (5) zur aufeinanderfolgenden Zuführung des ersten (A) und zweiten (B) Signals zu dem Aufzeichnungsmedium (7);
eine zweite Einrichtung (6) zur Zuführung des weiteren Signals (C) zu dem Aufzeichnungsmedium (7); und
eine Steuereinrichtung (8), die ausgebildet ist, wenigstens Daten zu empfangen, die die Start- und Endpunkte des ersten, zweiten und weiteren wiederzugebenden und auf das Aufzeichnungsmedium aufzuzeichnenden Signals definiert, und wenigstens zur:

automatischen Synchronisierung des Startpunktes ($A_{in}$) des ersten wiedergege-

benen Signales (A) mit einer ersten Referenzzeit ($R_{in}$) auf dem Aufzeichnungsmedium;

automatischen Synchronisierung des Endpunktes ($A_{out}$) des ersten wiedergegebenen Signales und des Startpunktes ($B_{in}$) des zweiten wiedergegebenen Signales (B) mit einer zweiten Referenzzeit ($E_{start}$) des Aufzeichnungsmediums und dadurch einer ersten Dauer ($A_{dur}$) zwischen den Start- und Endpunkten des ersten wiedergegebenen Signals, wobei die zweite Referenzzeit zeitlich später ist als die erste Referenzzeit;

automatischen Synchronisierung eines Endpunktes ($B_{out}$) des zweiten wiedergegebenen Signales mit einer dritten Referenzzeit ($R_{out}$) des Aufzeichnungsmediums und dadurch Definition einer zweiten Dauer ($B_{dur}$) zwischen den Start- und Endpunkten des zweiten wiedergegebenen Signals, wobei die dritte Referenzzeit zeitlich später ist als die zweite Referenzzeit;

automatischen Synchronisierung des Startpunktes ($C_{in}$) des weiteren wiedergegebenen Signales (C) mit der ersten Referenzzeit ($R_{in}$) des Aufzeichnungsmediums;

automatischen Synchronisierung des Endpunktes ($C_{out}$) des weiteren wiedergegebenen Signales (C) mit der dritten Referenzzeit ($R_{out}$) des Aufzeichnungsmediums und dadurch Definition einer dritten Dauer ($C_{dur}$) zwischen den Start- und Endpunkten des weiteren wiedergegebenen Signals;

automatischen Einstellung des Endpunktes des ersten wiedergegebenen Signales und des Startpunktes des zweiten wiedergegebenen Signales derart, daß die Summe der ersten und der zweiten Dauer gleich der dritten Dauer des weiteren wiedergegebenen Signals ist;

Steuerung der ersten Zuführungseinrichtung (6), das erste und zweite wiedergegebene Signal zu dem Aufzeichnungsmedium als Funktion der ersten, zweiten und dritten Referenzzeiten aufeinanderfolgend zuzuführen derart, daß das erste wiedergegebene Signal von der ersten Referenzzeit im wesentlichen bis zu der zweiten Referenzzeit zugeführt wird und das zweite wiedergegebene Signal im wesentlichen von der zweiten Referenzzeit bis zu der dritten Referenzzeit zugeführt wird; und

Steuerung der zweiten Zuführungseinrichtung (6), das dritte wiedergegebene Signal (C) zu dem Aufzeichnungsmedium zusammen mit der aufeinanderfolgenden Zuführung des ersten und zweiten wiedergegebenen Signals zuzuführen, so daß das weitere wiedergegebene Signal von der ersten Referenzzeit bis zu der dritten Referenzzeit zugeführt wird.

3. Editierverfahren gemäß Anspruch 1, wobei das weitere Signal dritte und vierte Signale aufweist und welches Verfahren ferner die Schritte aufweist:

Definition der Start- und Endpunkte des dritten und vierten Signals (D), das von einem Abspielmedium abzuspielen und auf das Aufzeichnungsmedium aufzuzeichnen sind, wobei das vierte Signal das andere des Video- und Audiosignals ist;

automatische Synchronisierung des Endpunktes des dritten wiedergegebenen Signales mit der ersten Referenzzeit ($R_{in}$) des Aufzeichnungsmediums;

automatische Synchronisierung des Endpunktes des dritten wiedergegebenen Signals und des Startpunktes des vierten wiedergegebenen Signals mit einer vierten Referenzzeit des Aufzeichnungsmediums, wobei die vierte Referenzzeit zeitlich später ist als die erste Referenzzeit;

automatische Synchronisierung des Endteils des vierten Signales mit der dritten Referenzzeit ($R_{out}$) des Aufzeichnungsmediums, wobei die dritte Referenzzeit ($R_{out}$) zeitlich später ist als die vierte Referenzzeit; und

aufeinanderfolgende Zuführung des dritten und vierten Signales zu dem Aufzeichnungsmedium zusammen mit der aufeinanderfolgenden Zuführung des ersten und zweiten Signales, so daß das dritte und vierte Signal von der ersten Referenzzeit ($R_{in}$) bis zu der dritten Referenzzeit ($R_{out}$) zugeführt wird.

4. Editiervorrichtung gemäß Anspruch 2, wobei die weitere Wiedergabeeinrichtung ein drittes Wiedergabegerät (3) und ein viertes Wiedergabegerät (4) aufweist, die zweite Zuführungseinrichtung (6) zur aufeinanderfolgenden Zuführung des dritten und vierten Signales zum Aufzeichnungsmedium ausgebildet ist, und die Steuereinrichtung (8) ausgebildet ist, zum:

Empfang von Daten, die die Start- und Endpunkte der dritten (C) und vierten (D) von dem jeweiligen Abspielmedium durch das dritte und vierte Wiedergabegerät (3, 4) wiederzugebende und auf das Aufzeichnungsmedium als weiteres Signal aufzuzeichnendes Signal definieren, und zur

automatischen Synchronisierung des Endpunktes des dritten wiedergegebenen Signals mit der ersten Referenzzeit ($R_{in}$) des Aufzeichnungsmediums;

automatischen Synchronisierung des Endpunktes des dritten wiedergegebenen Signals und des Startpunktes des vierten wiedergegebenen Signals mit einer vierten Referenzzeit des Aufzeichnungsmediums, wobei die vierte Referenzzeit zeitlich später ist als die erste Referenzzeit;

automatischen Synchronisierung des Endteils des vierten Signals mit der dritten Referenzzeit ($R_{out}$) des Aufzeichnungsmediums, wobei die dritte Referenzzeit ($R_{out}$) zeitlich später ist als die vierte Referenzzeit; und

Steuerung der zweiten Zuführungseinrichtung, um das dritte und vierte Signal dem Aufzeich-nungsmedium zusammen mit der aufeinander-folgenden Zuführung des ersten und zweiten Signals zuzuführen, so daß das dritte und vierte Signal von der ersten Referenzzeit ($R_{in}$) bis zu der dritten Referenzzeit ($R_{out}$) zugeführt wird.

## Revendications

1. Procédé de montage automatisé afin de monter automatiquement des signaux vidéo et audio, procédé comportant au moins les étapes consistant à :

définir les débuts et les fins de premier (A), second (B) et autre (C) signaux devant être reproduits à partir de premier, second et troisième supports de reproduction respectifs et enregistrés sur le même support d'enregistrement, lesdits premier et second signaux étant l'un de signaux vidéo et audio, ledit autre signal étant l'autre desdits signaux vidéo et audio ;

synchroniser automatiquement le début ($A_{in}$) du premier signal reproduit (A(V)) sur un pre-mier instant de référence ($R_{in}$) dudit support d'enregistrement ;

synchroniser automatiquement la fin ($A_{out}$) du-dit premier signal reproduit et le début ($B_{in}$) du second signal reproduit (B(V)) sur un second instant de référence ($E_{start}$) dudit support d'en-registrement, en définissant ainsi une première durée ($A_{dur}$) entre le début et la fin dudit premier signal reproduit (A), le second instant de réfé-rence ($E_{start}$) étant postérieur audit premier ins-tant de référence ($R_{in}$) ;

synchroniser automatiquement la fin ($B_{out}$) du-dit second signal reproduit sur un troisième ins-tant de référence ($R_{out}$) dudit support d'enregis-trement, en définissant ainsi une seconde durée ($B_{dur}$) entre le début et la fin dudit second signal reproduit, le troisième instant de référen-ce ($R_{out}$) étant postérieur audit second instant de référence ($E_{start}$) ;

synchroniser automatiquement le début ($C_{in}$) de l'autre signal reproduit (C(A)) sur ledit pre-

mier instant de référence ($R_{in}$) dudit support d'enregistrement ;

synchroniser automatiquement la fin ($C_{out}$) du-dit autre signal reproduit sur ledit troisième ins-tant de référence ($R_{out}$) dudit support d'enregis-trement, en définissant ainsi une troisième durée ($C_{dur}$) entre le début et la fin dudit autre signal reproduit ;

fixer automatiquement la fin dudit premier si-gnal reproduit ($A_{out}$) et ledit début dudit second signal reproduit ($B_{in}$) de telle sorte que la somme de ladite première ($A_{dur}$) et de ladite seconde ($B_{dur}$) durées soit égale à la troisième durée ($C_{dur}$) dudit autre signal reproduit ;

délivrer séquentiellement lesdits premier (A) et second (b) signaux reproduits audit support d'enregistrement en tant que fonction desdits premier ($R_{in}$), second ($E_{start}$) et troisième ($R_{out}$) instants de référence, de telle sorte que ledit premier signal reproduit (A) soit délivré depuis ledit premier instant de référence ($R_{in}$) sensi-blement jusqu'audit second instant de référen-ce ($E_{start}$) et que ledit second signal reproduit ($B_{in}$) soit délivré sensiblement depuis ledit se-cond instant de référence ($E_{start}$) jusqu'audit troisième instant de référence ($R_{out}$) ;

délivrer ledit autre signal reproduit (C) audit support d'enregistrement concurremment avec la délivrance séquentielle desdits premier (A) et second (b) signaux reproduits de sorte que ledit autre signal reproduit (C) soit délivré depuis ledit premier instant de référence ($R_{in}$) jus-qu'audit troisième instant de référence ($R_{out}$) ; et

enregistrer lesdits premier (A) et second (B) signaux reproduits simultanément avec ledit autre signal reproduit (C) sur ledit support d'enregistrement.

2. Dispositif de montage automatisé afin de monter des signaux vidéo et audio automatiquement sur un support d'enregistrement comportant :

des premiers (1), seconds (2) et autres (3, 4) moyens de reproduction pour reproduire des premier (A), second (b) et autre (C) signaux à partir de supports de reproduction respectifs ; les premier et second (A, B) signaux étant l'un de signaux vidéo et audio, l'autre signal (C) étant l'autre desdits signaux vidéo et audio ; des moyens d'enregistrement (7) afin d'enregistrer les premier et second signaux sur le même support d'enregistrement concurremment avec l'enregistrement de l'autre signal sur ledit support d'enregistrement ;

des premiers moyens (5) afin de délivrer séquentiellement les premier (A) et second (B) signaux aux moyens d'enregistrement (7) ;

des seconds moyens (6) afin de délivrer l'autre signal (C) aux moyens d'enregistrement (7) ; et des moyens de commande (8) étant actionnables pour au moins recevoir des données définissant le début et la fin des premier, second et autres signaux à reproduire et à enregistrer sur le support d'enregistrement, et au moins :

synchroniser automatiquement le début ($A_{in}$) du premier signal reproduit (A) sur un premier instant de référence ($R_{in}$) dudit support d'enregistrement ;

synchroniser automatiquement la fin ($A_{out}$) dudit premier signal reproduit (A) et le début ($B_{in}$) du second signal reproduit (B) sur un second instant de référence ($E_{start}$) dudit support d'enregistrement en définissant ainsi une première durée ($A_{dur}$) entre le début et la fin dudit premier signal reproduit, le second instant de référence étant postérieur audit premier instant de référence ;

synchroniser automatiquement la fin ($B_{out}$) dudit second signal reproduit (B) sur un troisième instant de référence ($R_{out}$) dudit support d'enregistrement, en définissant ainsi une seconde durée ($B_{dur}$) entre le début et la fin dudit second signal reproduit, le troisième instant de référence étant postérieur audit second instant de référence ;

synchroniser automatiquement le début ($C_{in}$) de l'autre signal reproduit (C) sur ledit premier instant de référence ($R_{in}$) dudit support d'enregistrement ;

synchroniser automatiquement la fin ($C_{out}$) dudit autre signal reproduit (C) sur ledit troisième instant de référence ($B_{out}$) dudit support d'enregistrement, en définissant ainsi une troisième durée ($C_{dur}$) entre le début et la fin dudit autre signal reproduit ;

fixer automatiquement la fin dudit premier signal reproduit et ledit début dudit second signal reproduit de telle sorte que la somme desdites première et seconde durées soit égale à la troisième durée dudit autre signal reproduit;

commander les premiers moyens de délivrance (5) pour délivrer séquentiellement lesdits premier et second signaux reproduits auxdits moyens d'enregistrement en tant que fonction desdits premier, second et troisième instants de référence, de telle sorte que ledit premier signal reproduit soit délivré depuis ledit premier instant de référence sensiblement jusqu'audit second instant de référence et que ledit second signal reproduit soit délivré sensiblement depuis ledit second instant de référence jusqu'audit troisième instant de référence ; et

commander les seconds moyens de délivrance (6) pour délivrer ledit autre signal reproduit auxdits moyens d'enregistrement pour un enregistrement concurremment avec la délivrance séquentielle desdits premier et second signaux reproduits, de sorte que ledit autre signal reproduit soit délivré depuis ledit premier instant de référence jusqu'audit troisième instant de référence.

3. Procédé de montage selon la revendication 1, dans lequel ledit autre signal comporte des troisième et quatrième signaux et comprenant en outre les étapes consistant à :

définir le début et la fin du troisième et quatrième signaux (D) devant être reproduits à partir d'un support de reproduction et enregistrés sur ledit support d'enregistrement, le quatrième signal étant ledit autre desdits signaux vidéo et audio ;

synchroniser automatiquement la fin du troisième signal reproduit sur ledit premier instant ($R_{in}$) du support d'enregistrement ;

synchroniser automatiquement la fin du troisième signal reproduit et le début du quatrième signal reproduit sur un quatrième instant de référence dudit support d'enregistrement, le quatrième instant de référence étant postérieur audit premier instant de référence ;

synchroniser automatiquement la fin du quatrième signal sur ledit troisième instant de référence ($R_{out}$) dudit support d'enregistrement, ledit troisième instant de référence ($R_{out}$) étant postérieur audit quatrième instant de référence ; et

délivrer séquentiellement lesdits troisième et quatrième signaux audit support d'enregistrement concurremment avec la délivrance séquentielle desdits premier et second signaux de manière que les troisième et quatrième signaux soient délivrés depuis ledit premier instant de référence ($R_{in}$) jusqu'audit troisième instant de référence ($R_{out}$).

4. Dispositif de montage selon la revendication 2, dans lequel les autres moyens de reproduction comportent un troisième reproducteur (3) et un quatrième reproducteur (4), les seconds moyens de délivrance (6) étant destinés à la délivrance séquentielle des troisième et quatrième signaux aux moyens d'enregistrement et les moyens de commande (8) étant actionnables pour :

recevoir des données définissant le début et la fin des troisième (C) et quatrième (D) signaux à reproduire depuis des supports de reproduction respectifs par les troisième et quatrième reproducteurs (3, 4) et enregistrés sur ledit support d'enregistrement en tant que ledit autre signal et pour synchroniser automatiquement la fin du troisième signal reproduit sur ledit premier instant de référence ($R_{in}$) du support d'enregistrement ;

synchroniser automatiquement la fin du troisième signal reproduit et le début du quatrième signal reproduit sur un quatrième instant de référence dudit support d'enregistrement, le quatrième instant de référence étant postérieur audit premier instant de référence ;

synchroniser automatiquement la fin du quatrième signal sur ledit troisième instant de référence ($R_{out}$) dudit support d'enregistrement, ledit troisième instant de référence ($R_{out}$) étant postérieur audit quatrième instant de référence ; et

commander les seconds moyens de délivrance pour délivrer lesdits troisième et quatrième signaux audit support d'enregistrement concurremment avec la délivrance séquentielle desdits premier et second signaux de sorte que les troisième et quatrième signaux soient délivrés depuis ledit premier instant de référence ($R_{in}$) jusqu'audit troisième instant de référence ($R_{out}$).

F I G. I(A)

| A SOURCE (V) |
| B SOURCE (A) |

F I G. I(B)

| A SOURCE (V) | B SOURCE (V) |
| C SOURCE (A) | |

F I G. I(C)

| A SOURCE (V) | |
| B SOURCE (A) | C SOURCE (A) |

F I G. I(D)

| A SOURCE (V) | B SOURCE (V) |
| C SOURCE (A) | D SOURCE (A) |

F I G. I(E)

| A SOURCE (V) | B SOURCE (V) |
| C SOURCE (A) | D SOURCE (A) |

F I G. 2

EP 0 586 248 B1

# F I G. 3

```
         ┌──────────────────────────────┐
         │            START             │
         └──────────────────────────────┘
                        │
ST-1     ┌──────────────────────────────┐
         │        Arin ← Rin            │
         └──────────────────────────────┘
                        │
ST-2     ┌──────────────────────────────┐
         │      Arout ← Rin + Adur       │
         └──────────────────────────────┘
                        │
ST-3     ┌──────────────────────────────┐
         │      CALCULATE  Erstart       │
         └──────────────────────────────┘
                        │
ST-4     ┌──────────────────────────────┐
         │      Brin ← Rin + Adur        │
         └──────────────────────────────┘
                        │
ST-5     ┌──────────────────────────────┐
         │  Brout ← Rin + Adur + Bdur    │
         └──────────────────────────────┘
                        │
         ┌──────────────────────────────┐
         │            END               │
         └──────────────────────────────┘
```

# F I G. 4

```
         ┌──────────────────────────────┐
         │            START             │
         └──────────────────────────────┘
                        │
ST-1     ┌──────────────────────────────┐
         │        Crin ← Rin            │
         └──────────────────────────────┘
                        │
ST-2     ┌──────────────────────────────┐
         │      Crout ← Rin + Cdur       │
         └──────────────────────────────┘
                        │
         ┌──────────────────────────────┐
         │            END               │
         └──────────────────────────────┘
```

# F I G. 5

| | CONTROLLING RECORDER 7 | CONTROLLING REPRODUCER 1 (A SOURCE) | CONTROLLING REPRODUCER 2 (B SOURCE) | CONTROLLING REPRODUCER 3 (C SOURCE) | CONTROLLING VIDEO SWITCHER | CONTROLLING AUDIO MIXER |
|---|---|---|---|---|---|---|
| | MAKE SURE THAT IT STABLY RUNS WHEN Rin COMES | MAKE SURE THAT IT STABLY RUNS AND THAT Rin COINCIDES WITH Ain | | MAKE SURE THAT IT STABLY RUNS AND THAT Rin COINCIDES WITH Cin | | |
| Rin → | — Rin — | — Ain — | MAKE SURE THAT IT STABLY RUNS AND THAT Estart COINCIDES WITH Bin | — Cin — | TAKE A SOURCE FOR PGM BUS | TAKE C SOURCE FOR CROSS POINT |
| Estart → | | — Aout — | — Bin — | | TAKE B SOURCE FOR PST BUS AND START PROCESSING | |
| Rout → | — Rout — | | — Bout — | — Cout — | | |

EP 0 586 248 B1